# EUROPEAN PATENT APPLICATION

(11) **EP 1 096 405 A2**
(43) Date of publication of application: **02.05.2001**
(21) Application number: 00203688.7
(22) Date of filing: 24.10.2000
(51) Int. Cl.: G06F 17/60

(54) **Wireless electronic travel assistance system**

(30) Priority: 29.10.1999 US 430588
(71) Applicant: SCHLUMBERGER TECHNOLOGIES, INC., San Jose, California 95134 (US)
(72) Inventor: Nassar, Sami, Dublin, CA 94568 (US)
(74) Representative: Fernandez, Francis

(57) **Abstract**

A system for distribution of travel related information includes, at the headend, software linked to existing travel related information databases such as airline reservation systems. A wireless gateway links the software with a conventional wireless messaging channel, such as GSM-SMS or Mobitext™, for two-way messaging capability to a user's wireless communications device which would be a two-way paging device or a cellular telephone or wireless personal digital assistant. The user's wireless communications device includes a processor which runs an application program dedicated to operating a user interface for providing and receiving travel information and/or assistance to the user. The information can be pulled down by the user by interrogating the travel databases; also he may receive notifications of changes, for instance, airline flight delays or cancellations as well as guidance, such as directions. This allows a traveler to plan his trip and allows him, en route, to receive new information and assistance about changes in his itinerary transmitted to his cellular telephone or pager, without requiring use of a portable computer or telephone. The messaging portion of the GSM telephone service is used, which reduces the user's cost.

## Description

### FIELD OF THE INVENTION

This invention relates to wireless communication systems of the messaging and/or pager type and to a particular use of such a system.

### BACKGROUND

People who are traveling, for instance, by scheduled airlines, staying in hotels, and renting cars frequently encounter problems due to delays and/or changes in their own or airline schedules. Airline delays are now endemic. Frequently, this requires a change in flights, hotels, etc. Furthermore, even without delays, travelers - especially business travelers - frequently change their plans on the run due to meetings taking longer or shorter than expected or other causes. Also, business travelers tend to be on tight schedules.

Current means for changing travel plans and checking, for instance, airline departure times, hotel reservations, etc., are varied. Of course, this can be done by telephone. It is also possible to perform such tasks over the Internet; for instance by accessing a website belonging to the airline or hotel chain or rental car company or a more general travel-related website. By these means one may check on arrangements or flight times or change or make new reservations. Of course these methods have drawbacks. Telephone contact is often relatively slow. Access via the Internet requires use of a computer or equivalent and a modem and the availability of a connection.

Moreover, neither of these.methods is as responsive as desired because neither provides any notification to the traveler of, for instance, airline flight delays or changes unless the traveler initiates the contact. That is, both of these are essentially methods of accessing databases which require the traveler to initiate each inquiry. Moreover, in most cases unless one has an intermediary such as a travel agent, every time one makes a reservation, one must go through the normal list of preferences, for instance, for an airline reservation, aisle or window seat, class of service, etc. All of these are drawbacks so that making, changing, and checking on travel arrangements is relatively cumbersome especially for the busy business traveler.

Even if the traveler uses a travel agent, if the traveler is actually en route, it is very unlikely the travel agent will check on flight delays, inform a hotel of an express check-in, inform a car rental company of an airport arrival or perform other tasks, and also inform the traveler.

Hence, there is a need for a better way to obtain travel information and assistance.

### SUMMARY

In accordance with this invention, a travel electronic assistance system provides for distribution of travel related information, making reservations, and changing reservations, for instance for airline travel, hotels, rental cars, and other types of travel arrangements. This system includes, at the headend, what is referred to as a travel intelligence center server which is a piece of computer software (code) executed on a general purpose computer. This travel intelligence center server interacts at the headend with the various existing databases in the travel industry, for instance airline reservation systems such as Sabre or other similar systems, the various individual airline reservation systems, the reservation information systems of hotel chains, and the reservation information systems of rental car companies. All of this information is presently available by telephoning travel agents or directly by telephone and in most cases, now accessible through the Internet.

On the downstream side, the travel intelligence center server is closely associated with a two-way wireless gateway to a wireless channel. The wireless gateway is also located at the headend. The wireless messaging is over a two-way conventional wireless link, for instance GSM (Global System for Mobile Communications) or Mobitext™, to a portable two-way wireless communications device in the possession of the traveler. It is to be understood that the paging/messaging can occur without interfering with the cellular telephony voice channel.

This communications device may be a GSM or similar cellular telephone or a two-way paging device of the type already commercially available.

The travel intelligence center server links the traveler (user) and the above-mentioned travel industry databases for purposes of inquiring as to, for instance, airline departure and arrival times for various flights, seat availability, making reservations, changing reservations, etc. The user interface is a set of menus accessed through the display and key pad of the communications device.

This user interface is provided and controlled by an applications program executed by a processor resident in the communications device. This application program is dedicated to supporting transmission and receipt of the travel related information. In some cases this processor is a part of an existing subscriber identification module (SIM) already resident in, for instance, a GSM cellular telephone. The SIM, also referred to in the industry as a smart card, is a computer processor (microprocessor or micro-controller) with associated memory which hosts applications programs executing at the wireless communication device, thereby also providing an interface to the conventional hardware portions of the wireless communications device.

In addition to supporting user initiated communications with the travel databases, the travel intelligence center server also transmits updates, initiated by it, to the user. For instance, the travel intelligence center server accesses a profile of the user's itinerary for a particular trip. This includes, for instance, airline flight numbers. The travel intelligence center server periodically (for instance, every 30 seconds) checks with the airline or other travel reservation information system for that particular flight to see if the flight has been delayed or canceled. Upon finding that a particular flight has been delayed or canceled, the travel intelligence center server initiates a message which it transmits via the wireless gateway to the user indicating the change in flight status. The user can then respond by reserving on another flight, or at least knows of the delay. The travel intelligence center server thereby keeps the user informed of any pertinent changes based on changes in the underlying schedules maintained in the airline database, for instance. Of course, this approach is not limited to the airline situation but, as described above, is also pertinent to rental car reservations, hotel reservations, and other type of travel arrangements including, for instance, rail or sea travel.

Advantageously, this system provides a convenient way for the user to make, check the status of, and change his reservations. Also, it allows provision of guidance information to the user, for instance, airport gate numbers or locations or driving directions. It does not require use of a portable computer and does not require making a telephone call. The only device needed by the user is a two-way pager or cellular telephone, which is more likely to be carried by the user than is a portable computer. Moreover, not requiring a telephone call renders the system inexpensive to use since typically the messaging service is an inexpensive flat rate payment plan rather than a per call charge, as in cellular telephony voice calls.

Advantageously, the user even while on the run is informed of new information available concerning his trip. The information is sent directly to his wireless communication device. He conventionally receives an indication of receipt of a message at his device, for instance, by a visual indicator or beeping.

The travel intelligence center server consolidates and monitors information concerning one or several trips for a particular user and notifies him, to his cellular telephone or wireless communication device, of any change and guides him throughout his trip.

A particular user joins the service. It is assumed that this is a service requiring payment - typically a monthly subscription fee. A subscriber database acquires the user's profile and controls profile operation. The new user creates a profile in the subscriber database of his travel preferences and also his information preferences such as to receive a reminder about a particular flight whether it is delayed or on time two hours ahead of departure or to receive a notification, for instance, when a particular fight boarding begins at the airport.

### BRIEF DESCRIPTION OF THE DRAWINGS

Fig. 1 shows a block diagram of an exemplary system in accordance with this invention.

Fig. 2 shows detail of an exemplary wireless communications device of Fig. 1.

Figs. 3A to 3C are a flow chart of operation of the Fig. 1 system.

### DETAILED DESCRIPTION

The present system is a mobile communications system providing travel related information and assistance to users. It's infrastructure uses well-known mobile (wireless) communications techniques. In one embodiment, the communications channel is the well established GSM system and includes what are called subscriber identification module (SIM) smart cards used in GSM cellular telephones. The GSM system is now operative in over 75 countries (including all European countries) and is also now available for digital cellular telephony in the United States. SIMs are already well-known in the GSM telephony field for subscriber identification purposes. They allow a call to be directed to a particular user no matter where the user is located in the world (assuming of course it is a location serviced by GSM telephony). SIM allows calls to be billed to the user's personal account. Pre-recorded information remains in the SIM's memory, not in the telephone itself. The SIM supports services such as abbreviated dialing and messaging. The messaging application is the one of interest in connection with the present invention. Such SIM smart cards are commercially available from Schlumberger Ltd. as well as other suppliers. Of course the present invention is not limited to the GSM system or the Schlumberger SIM smart card technology but this is merely illustrative of one embodiment thereof.

One current version of the GSM standard is called GSM Phase 2+. This defines new mobile telephone commands useful in handling calls and messages. Of course, again the present invention is not so limited. The SIM is effectively a computer chip including a microprocessor or controller and associated random access memory and read only memory. The SIM is typically supplied in a smart card package which is easily inserted in and removed from an associated socket in a particular cellular telephone by the user or telephone retailer the SIM is not soldered in). Of course the SIM may be hardwired in and other types of interfaces may be substituted therefor in accordance with this invention. The SIM includes resident software including an operating system and applications programs. The applications programs support various user activities, one of each is the travel information system in accordance with this invention.

The GSM standard in addition to supporting normal voice telephony, also includes what is called a short message service (SMS) for point-to-point short messages and also broadcast messages. The SMS includes an acknowledge and a reply format and is a two-way paging and messaging service. The GSM Phase 2+ standard is well-known and published under that name, and is incorporated herein by reference in its entirety.

A SIM, as identified above, typically can have a number of application programs stored in its memory. In one embodiment of this invention, one such application program is directed towards the travel information and guidance function and is written in the JAVA programming language. This program is executed by a virtual machine (operating system) of the JAVA type also resident in the SIM. Of course this is not limiting. JAVA application programs are well-known in the computer field and relatively easily written. Schlumberger Ltd. supplies SIM smart cards of the type identified above which support such application programs in the JAVA language.

The above described SIM smart cards are available in a commercial version for use in conjunction with GSM cellular telephony. The Schlumberger smart card suite of associated software includes the AREMIS™ application management server software ("server") 'located at the headend and the associated SIMERA™ JAVA SIM smart card. These are all compatible with the GSM Phase 2+ standard.

For the communications channel, GSM is not the only choice. Any other wireless messaging or paging service which provides for two-way communication of data (even if relatively limited amounts of data) is suitable. Another suitable example of such wireless communications scheme suitable for use in conjunction with the present invention is one conforming to the Mobitext™ standard. Again, the infrastructure for the Mobitext™ system is well-known and commercially accessible.

Other similar wireless messaging/paging systems may be developed in the future and also would support a system in accordance with the present invention, with suitable modifications of the type apparent to one of ordinary skill in the art in the light of this disclosure. Hence, further details of the communications channel are not given herein as being well-known in the field.

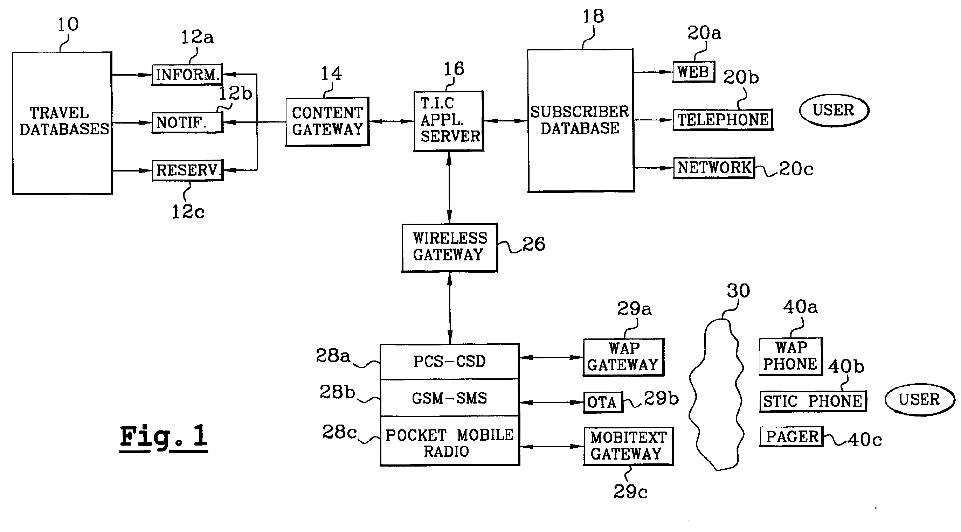

Fig. 1 shows in a block diagram a system in accordance with the present invention for distribution of travel related information and provision of travel assistance. A wholly conventional, and already in existence, element is the travel information databases 10. An example of this is the airlines' Sabre reservation system which is already accessible by travel agents and also via the Internet. (There are several other similar airline reservation systems.) Other examples are rental car company reservation databases, hotel chain reservation databases, and also travel related information such as airline flight information provided by commercial purveyors of such information. These databases may also be accessible via Internet websites maintained by various organizations such as the airlines, etc. In some cases there may be an additional software component required to access these databases, but such software components are of the type well-known in the field.

The content gateway 14 is a software module that assembles and monitors specific travel information found in various third party databases 10. The content gateway 14 also reformats the data from these databases into a unified format as expected by the TIC application server 16. The content gateway 14 tracks only the information requested by the TIC application server 16 (e.g., the content gateway will not scan nor store all flight information but only the flights registered as active in the TIC application server 16.)

The content gateway 14 has three associated sub-modules (software) to access the travel databases 10: Information module 12a fetches information requested by the TIC application server 16 (e.g., departure gate, rental car lot number, etc.); Notification module 12b monitors for specific events assigned by the TIC application server 16 (e.g., flight delays or changes in waiting status). The Notification module 12b will notify the travel service provider about specific subscriber information (e.g., notify the car rental company about the subscriber arrival, and/or inform the arrival hotel to prepare for a fast check-in). Reservation module 12c makes service requests on behalf of the user (e.g., rental car pick up time, rescheduling, flight reservations, etc.).

The travel intelligence center (TIC) application server 16 is another software module (computer program). Typically, the computer on which software 16, 12a, 12b, 12c and 14 run is at the facility of the organization providing the travel information service described herein. This computer is in communication via the Internet and/or dedicated telephone lines with the travel information databases 10 which are typically maintained at other locations. It is well-known, of course, to interface with these travel information databases 10 via the Internet or other means, such as travel agents do now. The computer on which the TIC applications server 16 and the other software modules run is not shown.

The TIC applications server 16 using the three other modules 12a, 12b, 12c is able to inform, track/guide and assist the users. The process starts when a user registers a trip into the system. The TIC applications server 16 activates the trip by requesting all the necessary information/monitoring from the content gateway 14. Using the wireless gateway 26, the TIC applications server 16 communicates to the user its findings. Server 16 sends the request to gateway 26. Gateway 26, based on the subscriber profile, forwards the message to the backend equipment of the corresponding wireless channel. For example, in GSM it will be an AREMIS server. In that case the AREMIS server formats the message into the applications format and sends it to the user using the SMS server which is a standard GSM capability.

The functionality of server 16 is as described herein and coding it would be well in the ordinary skill of the art given this description.

Another software module, typically running on the same computer as travel information server 16, is the subscriber database 18. When a user joins the service, that user creates a profile of his personal preferences in terms of airplane seat locations, type of hotel room, etc., as well as customized notification features in accordance with this system such as when he wants to receive a reminder of a scheduled flight or receive a notification when a particular flight is actually boarding. That user profile, as well as specific trip information, is organized and stored by subscriber database 18. Again, coding of the software for subscriber database 18 is readily accomplished given this description. The subscriber database 18 contains and maintains the subscriber profiles. The profiles are registered and updated online through a web site 20a or through GUI (graphical user interface) software 20c that can be installed on a standard personal computer with an internet/Intranet connection or simply by calling a 1-800 number 20b and talking to a customer service representative. In the same way a subscriber registers a trip into the subscriber database.

The user profile information has at least three sub-fields:

Billing profile; this field stores information such as subscriber name, address, etc.

Service level; the field has three categories, e.g., INFORM (information), TRACK/GUIDE (directions to the next destination), and ASSIST (assist in changing the itinerary).

Service customization; every service can be customized to fit the personal requirements of the user (e.g., notification beep when flight boarding starts).

The wireless gateway software module 26 is conventional, and provides the link between the TIC applications server 16 and the conventional wireless channel. The wireless gateway 26 includes a dispatcher module and wireless channel modules. The dispatcher, based on the subscriber profile/address, forwards the message to be sent to the appropriate wireless channel module and the wireless channel module formats the message to the appropriate data network and forwards it to the end user. (AREMIS is a wireless module in the GSM technology.) Module 26 wirelessly notifies other travel service providers of specific events with regards to the subscriber (e.g., paging the hotel front desk to prepare an express check in for the subscriber). Equipped with a multi wireless channel capability as shown in Fig. 1, the system can be provided to a wider population. An example of wireless gateway 26 is a Mobitext™ server of the type well-known in the field for two-way paging type messaging. Another example is the above described AREMIS™ server software offered commercially by Schlumberger Ltd. AREMIS sends the message for the user through an SMS center, which is standard GSM hardware.

Downstream of wireless gateway 26 is the conventional wireless (radio) channel. Three examples of this wireless channel are illustrated: the PCS-SCD digital cellular telephone channel 28a using a WAP ("Wireless Application Protocol") gateway 29a; the above-mentioned GSM-SMS service 28b, using the OTA ("Over The Air") AREMIS gateway 29b; and pocket mobile radio 28c using, e.g., Mobitext gateway 29c. Each wireless channel includes all of the (existing) infrastructure for such wireless messaging communications including the wired portions, the worldwide network of radio transmitters and receivers, and all of the coordinating infrastructure in order to support wireless communications of this type. The wireless channel may include satellite communications. It is to be understood that the present system is most useful in the context of an existing wireless channel such as GSM or Mobitext™ which has wide coverage, not only in the United States but also internationally. Of course a significant number of the users of the present system would be traveling internationally and would expect service overseas as well as within the U.S. using the same wireless communications device. Hence the GSM infrastructure is highly suitable.

The only portion of the system in possession of the user ("user" in Fig. 1) is the wireless communications device, of which three examples 40a, 40b, 40c are shown. The WAP cellular telephone 40a uses the CSD/Circuit Switch Data (voice channel) for messaging via the WAP gateway 29a. The STK cellular telephone 40b uses GSM-SMS type messaging to Communicate via the OTA gateway 29b. The pager 40c communicates via Mobitext™ gateway 29c, all via radio waves 30.

Device 40 generically is typically embodied in a two-way messaging type pager (capable of both receiving and sending messages) or a cellular telephone of the GSM type or other type of cellular telephone capable of supporting messaging (data) as well as voice calls. While possibly device 40 could be an analog cellular telephone using a modem, this is not preferred since that configuration would require initiation and receipt of a telephone call for each message transmitted or received. This undesirably increases user cost since typically cellular telephone systems charge on a usage basis for voice calls. This is unlike the case with the messaging systems as described above for which there is typically a relatively low flat monthly charge.

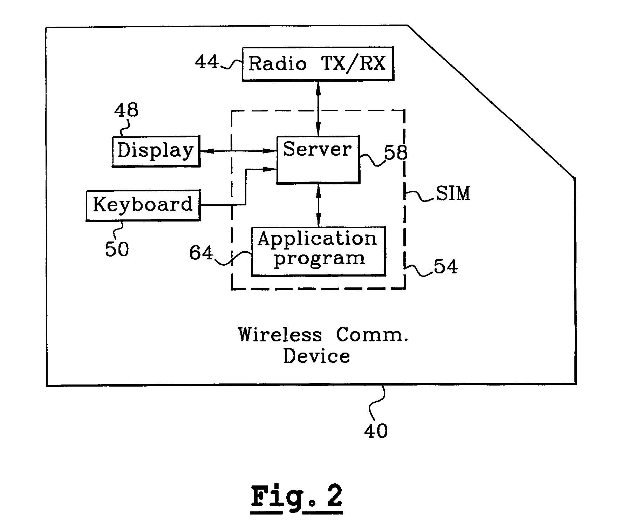

In any case, a generic user wireless communication device 40 is shown in Fig. 2 and is mostly of a conventional type as described above. It includes the radio transmitter/receiver portions 44 which, in one example, conform to the GSM Phase 2+ standard, and display 48 which is for instance a small LCD type display capable of displaying, for instance, about 200 characters arranged, e.g., in 10 lines of 20 characters each (such as available now on certain cellular telephones). Also, keypad 50 is the conventional cellular telephone keyboard and does not need to be a full function computer type keyboard. Hence display 48 and keypad 50 are of the type already in some digital cellular telephones. Such a wireless communication device typically is a pocket-size device although it could be larger, such as a laptop computer.

As is conventional, for instance in GSM systems, there is SIM (smart card) 54 of the type described above. SIM 54 includes a server (software) 58 which, as described above, may be a SIMERA™ type server which is software providing an environment (operating system) for execution of application programs. Present GSM cellular telephones include the server 58 and usually at least one applicant program, for instance, for the subscriber identification function (not shown). Additionally in accordance with this invention, another applications program 64 controls the user interface (display 48 and keypad 50) to display and manage the travel related information and assistance. Any other applications program present are not shown here, for simplicity. Both server 58 and the application program 64 typically are programs resident in the memory of the SIM and executed by the processor also present in the SIM. Note that, for instance, GSM type cellular telephones require a SIM to host application programs even for ordinary cellular telephony. Hence, little or no additional hardware cost is incurred by the user in the present system compared to an existing GSM cellular telephone.

Travel related information can be "pushed down" to the user from the headend (TIC server 16) or "pulled by" the user (that is, requested by him) using his wireless communication device 40. An example of airline travel-related information is the status of flight departure time, arrival time, gate number, and special events such as flight changes, delays, or cancellations. Also, notifications can be provided in terms of what is the boarding time, are upgrades available, is there a waiting list, and also pre-flight reminders to the user such as notifying him two hours before flight time and also notifying him when he is actually at the airport and not present at the gate when, for instance, boarding is available. The user interface is by a set of menus, shown on the display 48. The user makes menu selections via keypad 50. A voice operated interface is also possible. An example of the user interface via the menus follows, also showing the menu text that appears on the display 48.

Mr. Schlumberger, based in San Jose, California and a subscriber, decides to attend a meeting in New York. After making his travel arrangements in the usual way, he keys the travel information into the system by logging into the travel assistance website 20a by his computer. Based on the service level that Mr. Schlumberger earlier specified, the following occurs:

Two hours before the trip Mr. Schlumberger receives the following message on his Phase2+ GSM cellular telephone:
** Your AA1234 flight is departing from San Jose Airport Gate Al at 10:30 AM.
   Mr. Schlumberger arrives early at the airport and decides to have breakfast in the airport cafe. While completing his breakfast his cellular telephone beeps and his phone display 48 displays:
** AA1234 flight is now boarding at gate Al.
   While boarding the plane Mr. Schlumberger switches off his telephone, but as soon as the plane lands, he switches it back on. On detection of this the TIC applications server 16 notifies the rental car company of his arrival and sends Mr. Schlumberger the following message:
** Welcome to New York. Your HERTZ car, blue Ford Taurus, TEA1234 is in Level 2, Parking Lot 77. Thank you for choosing HERTZ.
   When Mr. Schlumberger arrives at the rental car counter it is 11:00 PM. Looking at a map while in the vehicle to try to find the hotel he decides to consult the assistance portion of the system. With a few clicks using the menus, he is able to request express check in and downloaded directions to his hotel:
** Airport
   Airline
   Rental Car
   Hotel
      Front desk hotline
      Address
      Express check in
      Express check out
      Directions from airport
   Directions

   While driving to the hotel he remembers that at this hotel there is no restaurant room services after 11:30 PM, so he reaches for his telephone, selects the front desk hotline item, and orders a room service dinner.
   The next day while still in his meeting, he receives two beeps on his telephone and the following message is displayed:
** Your AA4321 flight is departing from JFK Airport Gate B2 at 6:30 PM.
   At this point Mr. Schlumberger selects the Next Available flight request in the services menu:
** Airport
   Hotline
   Current flight status
   Previous available flight
   Next available flight
      Rental Car

   A few seconds later a list of choices appears on the screen and Mr. Schlumberger selects the last flight out of New York for San Jose:
** Next available flight from JFK
   AA5432 at 7:30 PM
   DL5555 at 9:45 PM
   UAL4444 at 10:05 PM
      Reschedule

   Several hours later while trying to make the last flight out, Mr. Schlumberger is beeped again and the following message is displayed:
** Flight UAL4444 is delayed by 15 minutes.
   Now flight UAL444 is departing from JFK Gate C4 at 10:20 PM.

Similar types of information, of course, might be pertinent to the car rental, railroad, or hotel reservation situations commonly encountered during travel. It is contemplated, of course, upon or before initiation of a trip that the trip itinerary is registered by the user in his profile in subscriber database 18. Typically the profile in subscriber database 18 includes an itinerary for each trip, both the current trip and any future trips for that user. The itinerary may also be loaded into the profile in database 18 via the wireless communications device; this itinerary is alternatively provided via a travel agent, the Internet, or any other form of communications as shown in Fig. 1.

While in one embodiment the present system is a subscriber type system where each user pays a monthly subscriber fee, this is not limiting; other commercial embodiments are possible, for instance, corporate subscriptions for some, or all, employees, airlines providing the service for selected classes of passengers, travel agents providing it to their customers, or a GSM telephony provider offering it as part of the GSM cellular telephone or paging service.

Various embodiments of the present invention may provide access to only some or all of the above described travel related information and assistance. For instance, a basic service might provide travel information only, with no notifications back to the user (no call backs) and without any reservation capability. A more advanced service might provide the travel information and notification but not reservations. The full service would provide the information, notification, and reservations and guidance including electronic airline ticketing. Also, the various levels of service could vary depending on how much a particular user pays. Of course, these various implementations fall within the scope of the invention.

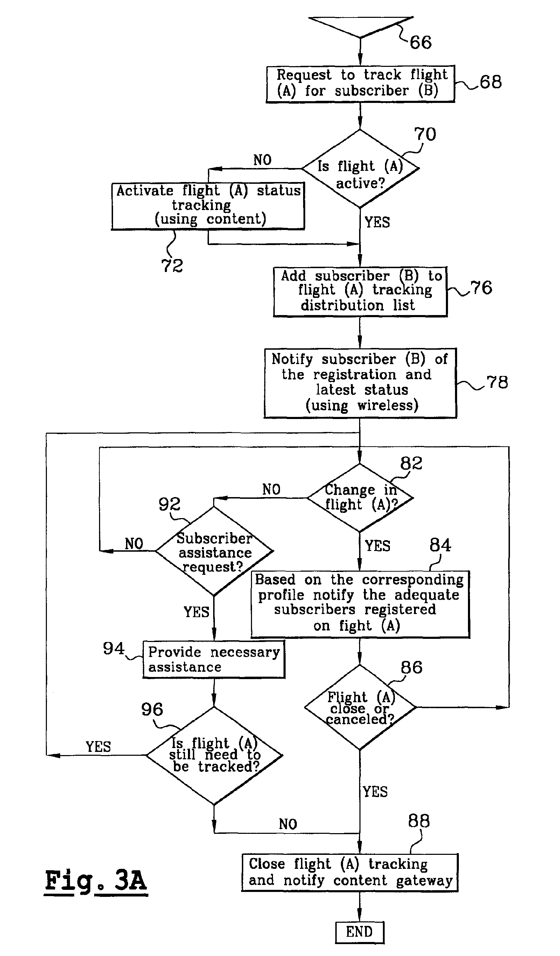

Figs. 3A through 3C show in flow charts operation of the Fig. 1 system. Starting in Fig. 3A at 66, at 68 a request is received to track flight A for subscriber (user) B. The system inquires at step 70 "is flight A active?" This is accomplished by the applications server 16. If flight A is determined to be active, next at 76, subscriber B is added to the flight A tracking distribution list, and at 78 subscriber B is notified of the registration and latest flight status using the wireless channel, as shown in Fig. 1. If flight A is not active in 70 then at 72 flight A status is activated to be tracked using the content databases 10 via the content gateway 14.

At 82, it is determined if there is a change in flight A, for instance, departure or arrival. If yes, then at 84, based on the corresponding profile in the subscriber database 18, the users who are registered on flight A are notified using the wireless channel. It is determined then at 86, whether flight A is closed or canceled. If closed (terminated or arrived), then the content gateway 14 is notified. The next step is the end. If at 82 the answer is no, the question is at 92 "is subscriber assistance requested?" If no request, control is then returned to 82. If yes at 94, then the requested assistance is provided via the wireless link. Then the next question at 96 is, "is flight A still to be tracked?" and if not, return to 88. If yes, then return to 62.

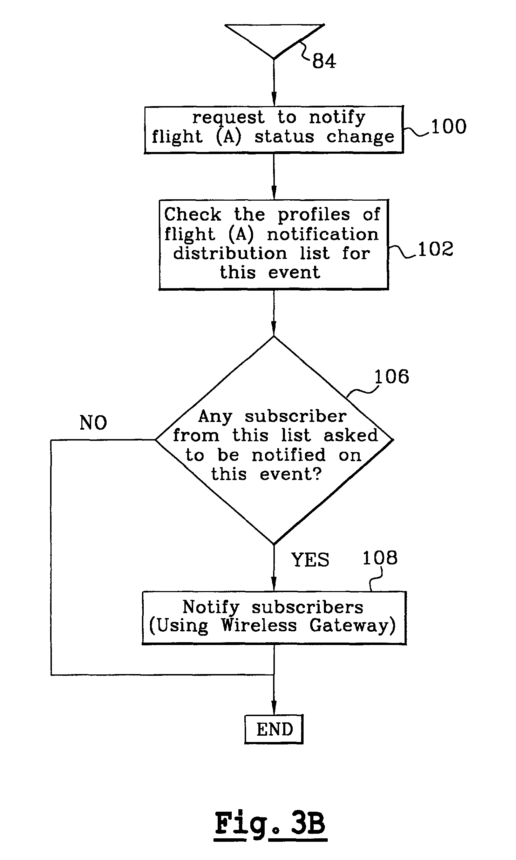

Fig. 3B shows detail of the processing at 84 of Fig. 3A. At 100, there is a request to notify regarding the flight A status change. At 102 the profiles of the flight A notification distribution list are checked for this event. At 106 it is determined whether any subscriber from this list asked to be notified of this event. If yes, at 108 he is notified using the wireless gateway 26. If no, processing is terminated.

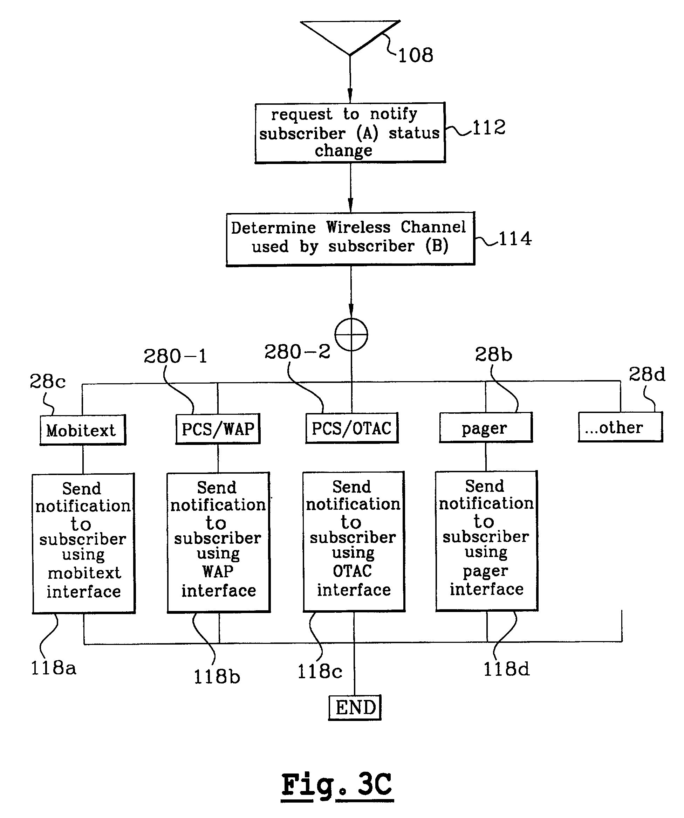

Fig. 3C shows detail of processing at the notifying subscribers 10B of Fig. 3B. First there is a request to notify subscriber A of the status change at 112. Next it is determined which particular wireless channel is used by subscriber B. Of course, this is in the context of a multi-wireless channel environment as shown in Fig. 1.

At this point the system chooses the appropriate wireless channel, as shown, including in this example two variations of the PCS wireless channel and also another wireless channel 28d, which is otherwise not herein particularized. Next, at each of steps 118a, 118b, 118c and 118d, notification is sent to the subscriber using the appropriate channel interface as shown in Fig. 1. Then processing terminates for this phase.

This description is illustrative and not limiting; further modifications will be apparent to one skilled in the art in light of this disclosure and are intended to fall within the scope of the appended claims.

## Claims

1. A system for distribution of travel related information comprising:
a travel applications server coupled to at least one database of travel related information;
a wireless gateway coupling the travel applications server to a two-way wireless messaging channel; and
at least one wireless two-way communications device for receiving messages from and sending messages to the travel applications server via the wireless gateway, and including a processor executing an application program for receiving and sending the messages.

2. The system of Claim 1, wherein the wireless gateway is coupled to one of a cellular telephone, GSM, or pocket mobile radio channel.

3. The system of Claim 1, wherein the communications device is one of a cellular telephone or a two-way pager.

4. The system of Claim 1, wherein the travel related information includes airline flight number, departure, and arrival information.

5. The system of Claim 4, wherein the travel related information further includes travel reservations.

6. The system of Claim 1, wherein the travel related information includes travel guidance.

7. The system of Claim 1, wherein the applications server initiates transmission of a message to the communications device upon a change in travel related information in the database.

8. The system of Claim 1, whereas the processor is a part of a subscriber identification module of the communications device.

9. A method of distributing travel related information, comprising the acts of:
accessing at least one database of travel related information to obtain information therefrom;
transferring the accessed information to a two-way wireless messaging channel;
digitally communicating the accessed information over the messaging channel to a two-way communication device; and
receiving the information at the two-way communications device.

10. The method of Claim 9, wherein the messaging channel is one of a cellular telephone, GSM, or pocket mobile radio channel.

11. The method of Claim 9, wherein the communications device is one of a cellular telephone or a two-way pager.

12. The method of Claim 9, wherein the receiving includes executing an application program in the JAVA language.

13. The method of Claim 9, wherein the travel related information includes airline flight number, departure, and arrival information.

14. The method of Claim 9, wherein the travel related information further includes travel reservations.

15. The method of Claim 9, wherein the travel related information includes travel guidance.

16. The method of Claim 9, further comprising initiating transmission of a message to the communications device upon a change in travel related information in the database.

17. An apparatus for use in a communications device which communicates over a wireless two-way messaging channel to an applications server, the apparatus comprising:
a processor; and
a memory storing an application program to be executed by the processor, where the application program controls the sending and receiving of messages to the messaging server, the messages pertaining to information in at least one database of travel related information accessible by the applications server.

18. The apparatus of Claim 17, wherein the messaging channel is one of GSM, cellular telephone, or pocket mobile radio.

19. The apparatus of Claim 17, wherein the communications device is one of a cellular telephone or a two-way pager.

20. The apparatus of Claim 17, wherein the information includes airline flight number, departure, and arrival information.

21. The apparatus of Claim 17, wherein the information further includes travel reservations.

22. The apparatus of Claim 17, wherein the messaging server initiates transmission of a message to the communications device upon a change in information in the database.

23. The apparatus of Claim 17, whereas the process and memory are a part of subscriber identification module of the communications device.

24. A method of distributing travel related information, comprising the acts of:
registering a plurality of subscribers, each subscriber having a wireless communication device;
receiving a payment to allow each subscriber access to at least one database of travel related information; and
providing the travel related information via the wireless communications device, each subscriber being able also to transmit messages via the subscriber's wireless communication device to access information in the at least one database.
